# EUROPEAN PATENT SPECIFICATION

(11) **EP 2 230 346 B1**
(45) Date of publication and mention of the grant of the patent: **28.09.2011**
(21) Application number: 09155590.4
(22) Date of filing: 19.03.2009
(51) Int. Cl.: D06F 35/00

(54) **Washing cycle for economic labelling of washing machine**
Waschzyklus zur ökonomischen Kennzeichnung einer Waschmaschine
Cycle de lavage pour l'étiquetage économique d'un lave-linge

(43) Date of publication of application: 22.09.2010
(73) Proprietor: Electrolux Home Products Corporation N.V., 1130 Brussels (BE)
(72) Inventor: Taffahi, Mustapha, 08000, LES AYVELLES (FR); Migeot, Joseph, 02830, WATIGNY (FR)
(74) Representative: Rhein, Alain

(56) References cited:
- DE-A1-102004 039 662

## Description

The present invention concerns a washing cycle for economic labelling of washing machine having a perforated drum rotary about a horizontal axis in the interior of a tub.

Actually, the washing machines constructors care for the method of their machine to offer the best performances of washing in view to optimize them, in particulars in introducing a pre clean operation before operating the main wash. It is the case in the method described in the following documents.

EP Patent Application n° 1 657 344 concerning a method for washing sportswear items in a traditional-type rotating drum clothes washing machine comprising at least a main wash phase, a rinse phase and a final spin-extraction phase wherein a preliminary wash phase to be performed in cold water, without any detergent addition and under reduced mechanical agitation of the clothes is carried out in advance of the main wash phase. This preliminary wash phase being followed by a soil settling step with the machine at standstill and a subsequent water outlet step. The aim of this washing method is only to have a pre clean operating before the main wash for sport garments in order to remove the dirty resulting to the particular using of that kind of clothes.

UK Patent Application n° 2 145 119 having as object a method of operating a program drum-type washing machine in which the drum is caused to rotate at a first, lower speed at the beginning of a pre-wash cycle. After a predetermined period of time, the drum speed is increased to a second, higher speed. The aim of this method being to permit an item of washing to be soaked more satisfactorily and more rapidly.

DE Patent Application n° 10 2004 039662 concerning a program-controlled washing machine. The aim of the invention is to optimize the completeness, uniformity and reproducibility of a wetting process in a program-controlled washing machine, which can be adjusted according to the amount of laundry in a washing drum, which is rotationally mounted in a lye container about a non-vertical axis by means of a water supply system and by means a control device, said process being temporally controlled by the supply of water into the lye container. According to the invention, the wetting process is divided up into a series of phases (Ph1-Ph3) corresponding to the various amounts (small, medium, large) of laundry that is to be treated. As a result, it is possible to adapt the wetting process according to the number and the formation of individual phases in relation to the amount of laundry that is to be treated.

We notice that this program takes account only the amount of laundry and not the nature and the knitwear of it and that the laundry is saturated with water at the beginning of the washing phase, because only the water in excess is drained at the end of the wetting phase, although the water absorption is different for clothes in woolen, cotton or synthetic materials and that nothing is made to start the washing phase with laundry just damp whatever its nature may be and not saturated with water, in order to facilitate their impregnation by the water filled after with the detergent at the beginning of the washing phase, with the result that involves.

In view of the state of the art evoked above the aim of the present invention as characterized in the claims, is to use of a specific cycle for economic label which combines a long wetting phase and spinning before the main wash phase in increasing as well the wetting of laundry before washing it ; this phase being composed by a filling phase, a phase with standard movement and a spinning including draining ; all without detergent and without heating water, in order to the cycle profile be able to wet and to distribute the wetting as well for very low ratio drum volume Vs load, and the relevant manner to do it.

In this process, the aim is to need to wet as well all the laundry inside the drum and to shake the laundry to give space to start the mechanical action, when the ratio drum volume Vs load is very low and out of what is considered as a standard up to now.

For that, a quantity of water is loaded and a low wetting phase is obtained followed with a energetic phases and finally with a spin impulsion which let the machine able to create what mentioned before. This program is also dedicated to "E_Label program" for full cotton program economy and not for sportswear which demands another program corresponding to the one described for example in EP 1 657 344 analyzed above. In fact, it is unusual to have this kind of phase for such program, as we have an amount of water which is not employed as well.

These and others features of the present invention will be made clearer from the detailed description of some of its embodiments illustrated by way of a non limiting example in accompanying with the drawings on which :
- figure 1 shows a diagram on which all the phases of the washing of cotton economic 60° cycle are represented, including wetting phase and spinning before main wash,
- figure 2 shows an enlargement of the part of the diagram corresponding only to the wetting phase and spinning before wash.

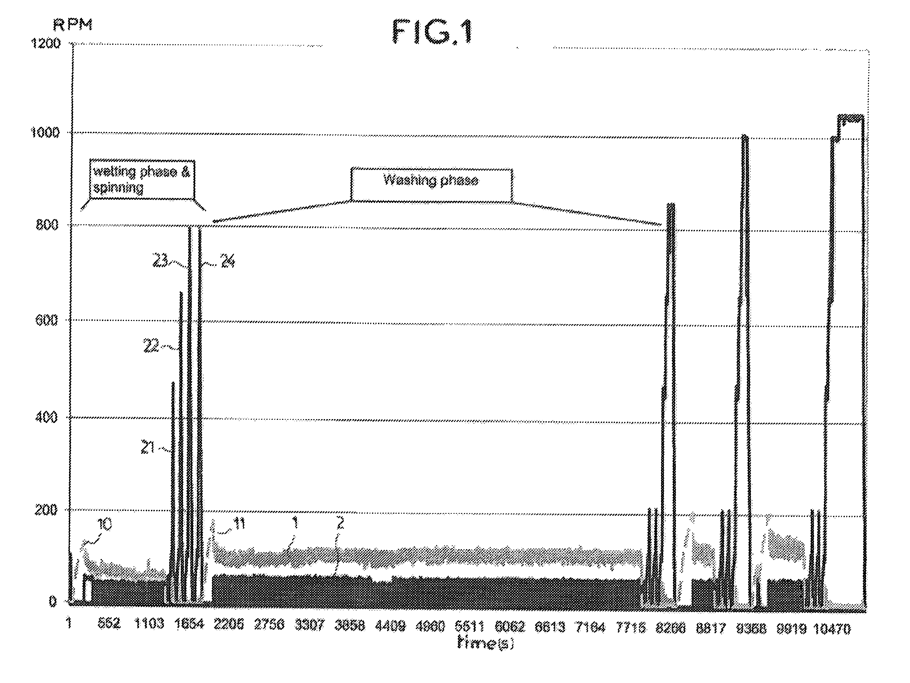

Regarding figure 1, We can see on the diagram showing water level **1** and drum speed **2** that during a period of about 30 minutes, corresponding to a wetting phase and spinning, the drum is subject first to normal alternate rotation after water filling **10** of about 2/3, of normal capacity corresponding to 4,5 - 7,5 liters without detergent addition, corresponding to the wetting phase during about 15 to 25 minutes preferably 20 at about 30-50 RPM preferably 40 to obtain homogeneous wetting and then by spinning phase corresponding to drying impulses gradually accelerated accompanied by a partial drum draining phase, wetting phase and spinning being directly followed by a complementary water filling **11** corresponding to about 10 liters with detergent addition, and the usual main wash including washing phase rinsing and spin-drying phase.

As we can see on this diagram that specific cycle for economic label combines a relatively long wetting phase and spinning before the main wash phase in increasing as well the wetting of laundry before washing it, in fact a phase composed by water fill phase without detergent, a phase with standard movement and a spinning including partial draining in order to the cycle profile be able to wet and to distribute the wetting as well for very low ratio drum volume Vs load and the relevant manner to do it.

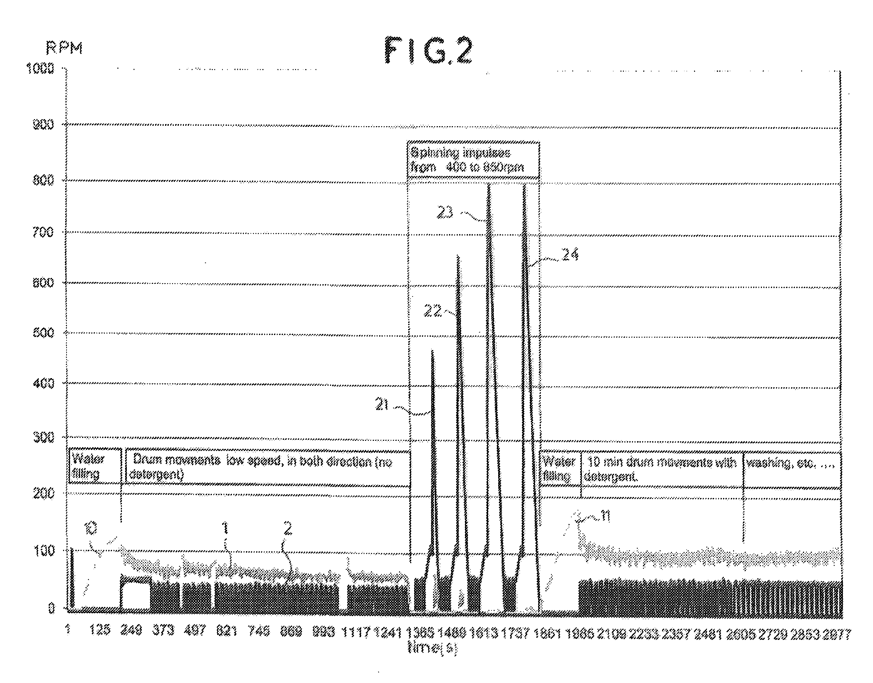

Regarding now fig. 2, we see on this diagram that the water initially filled is progressively absorbed in part by the clothes during a long drum movement at low speed without detergent addition in view to obtain an optimal clothes wetting before the main wash starting. To obtain this result the washing phase is preceded by four spinning impulses **21-24** increased from 400 to 850 rpm in this example, accompanied by the progressive draining of the water in excess in order to wet sufficiently the clothes to facilitate their impregnation by the water filled with the detergent at the beginning of the washing phase during the first 10 minutes drum movement, the washing being after pursued during the time corresponding to the washing cycle initially chosen. The first 10 minutes of drum movement of washing being effected without heating when the clothes are blood impregnated and with heating in the others cases.

With this process the drying phase lay on the clothes against the drum wall stay possible after pre-washing with heating and detergent addition and the drum can be loaded beyond the standard capacity of it, this process being effected at the temperature initially chosen in the washing program.

## Claims

1. Washing method for washing machine having a perforated drum which is rotary about an horizontal axis in the interior of a tub and which is capable of receiving the wash load therein, this washing method comprising a wetting phase, a washing phase, a rinse phase and a final spin extraction phase, the wetting phase being performed without any detergent addition and under reduced mechanical agitation of the clothes, and coming out in advance of the washing phase **characterized in that** the said wetting phase comprises the filling of a reduced quantity of water in comparison with the normal machine capacity followed by a wetting phase of 15 to 25 minutes duration with drum standard movement of 30 to 50 RPM followed by a spinning comprising at least one impulse accompanied with partial draining of the water initially filled in the tub corresponding to approximately the water not kept by the clothes.

2. Washing method according to claim 1, **characterized in that** the drum rotating speed is about 40 RPM.

3. Washing method according to claim 1, **characterized in that** the wetting phase duration is chosen according to the nature of the laundry.

4. Washing method according to claim 1, **characterized in that** the quantity of water filled at the beginning of the wetting phase corresponds to about 2/3 of the normal machine capacity.

5. Washing method according to claim 1, **characterized in that** the spinning comprises 4 impulses (**21-24**).

6. Washing method according to claim 1 or 5, **characterized in that** the impulses are gradually increased from 400 RPM to 800 RPM.

7. Washing method according to claim 1, in that the spinning duration is about 10 minutes.

8. Washing method according to claim 1, **characterized in that** the wetting phase is increased for a maximal drum loading in using for that a prewashing and spinning phase.

9. Washing method according to claim 1, **characterized in that** the preliminary phase is directly followed by a complementary water filling of about 10 liters with detergent addition for main washing.

## Patentansprüche

1. Waschverfahren für eine Waschmaschine, die eine durchlöcherte Trommel aufweist, welche um eine horizontale Achse im Innern eines Behälters drehbar und imstande ist, die zu waschende Waschgutfüllmenge aufzunehmen, wobei dieses Waschverfahren eine Anfeuchtphase, eine Waschphase, eine Spülphase und eine Phase des Wasserentzugs durch Endschleudern umfasst, wobei die Anfeuchtphase ohne jeglichen Zusatz von Waschmitteln und unter begrenztem mechanischen Verrühren des Waschguts erfolgt und der Waschphase voraus geht, **dadurch gekennzeichnet, dass** die besagte Anfeuchtphase das Auffüllen einer Wassermenge umfasst, die in Vergleich zu dem normalen Fassvermögen der Maschine reduziert ist, gefolgt von einer Anfeuchtphase mit einer Dauer von 15 bis 25 Minuten mit einer üblichen Bewegung der Trommel mit 30 bis 50 Umdrehungen pro Minute, gefolgt von einem Zentrifugieren, welches zumindest ein Bewegungsmoment umfasst, mit einer teilweisen Abführung des Wassers, das ursprünglich in den Behälter aufgefüllt wurde und ungefähr der Wassermenge entspricht, die in dem Waschgut nicht verblieben ist.

2. Waschverfahren nach Anspruch 1, **dadurch gekennzeichnet, dass** die Drehgeschwindigkeit der Trommel ungefähr 40 Umdrehungen pro Minute beträgt.

3. Waschverfahren nach Anspruch 1, **dadurch gekennzeichnet, dass** die Dauer der Anfeuchtphase je nach der Beschaffenheit des Waschzeugs gewählt wird.

4. Waschverfahren nach Anspruch 1, **dadurch gekennzeichnet, dass** die zu Beginn der Anfeuchtphase aufgefüllte Wassermenge etwa 2/3 des normalen Fassvermögens der Maschine entspricht.

5. Waschverfahren nach Anspruch 1, **dadurch gekennzeichnet, dass** das Zentrifugieren vier Bewegungsmomente (21-24) umfasst.

6. Waschverfahren nach Anspruch 1 oder 5, **dadurch gekennzeichnet, dass** die Bewegungsmomente fortschreitend von 400 Umdrehungen pro Minute auf 800 Umdrehungen pro Minute erhöht werden.

7. Waschverfahren nach Anspruch 1, **dadurch gekennzeichnet, dass** die Dauer des Zentrifugierens ungefähr 10 Minuten ist.

8. Waschverfahren nach Anspruch 1, **dadurch gekennzeichnet, dass** die Anfeuchtphase für eine maximale Befüllungsmenge der Trommel erhöht ist, indem zu diesem Zweck eine Phase zum Vorwaschen und Zentrifugieren verwendet wird.

9. Waschverfahren nach Anspruch 1, **dadurch gekennzeichnet, dass** unmittelbar nach der Vorphase ein zusätzliches Auffüllen von annährend 10 Litern Wasser mit Waschmittelzusatz für das Hauptwaschen folgt.

## Revendications

1. Procédé de lavage pour une machine à laver présentant un tambour perforé qui est rotatif autour d'un axe horizontal à l'intérieur d'une cuve et apte à recevoir la charge à laver, ce procédé de lavage comprenant une phase de mouillage, une phase de lavage, une phase de rinçage et une phase finale d'essorage, la phase de mouillage étant réalisée sans aucune addition de produit détergent et sous agitation mécanique réduite des vêtements et précédant la phase de lavage, **caractérisé en ce que** ladite phase de mouillage comprend le remplissage d'une quantité d'eau réduite en comparaison avec la capacité normale de la machine, suivie d'une phase de mouillage d'une durée de 15 à 25 minutes avec un mouvement standard du tambour de 30 à 50 tours par minute, suivie d'un essorage comprenant au moins une impulsion accompagnée d'une évacuation partielle de l'eau initialement déposée dans la cuve et correspondant environ à l'eau non retenue par les vêtements.

2. Procédé de lavage selon la revendication 1, **caractérisé en ce que** la vitesse de rotation du tambour est d'environ 40 tours par minute.

3. Procédé de lavage selon la revendication 1, **caractérisé en ce que** la durée de la phase de mouillage est choisie selon la nature du linge.

4. Procédé de lavage selon la revendication 1, **caractérisé en ce que** la quantité d'eau déposée au début de la phase de mouillage correspond à environ 2/3 de la capacité normale de la machine.

5. Procédé de lavage selon la revendication 1, **caractérisé en ce que** l'essorage comprend 4 impulsions (21-24).

6. Procédé de lavage selon la revendication 1 ou 5, **caractérisé en ce que** les impulsions sont progressivement augmentées de 400 tours par minute à 800 tours par minute.

7. Procédé de lavage selon la revendication 1, **caractérisé en ce que** la durée de l'essorage est d'environ 10 minutes.

8. Procédé de lavage selon la revendication 1, **caractérisé en ce que** la phase de mouillage est augmentée pour une charge maximale du tambour en utilisant à cet effet une phase de prélavage et d'essorage.

9. Procédé de lavage selon la revendication 1, **caractérisé en ce que** la phase préliminaire est directement suivie d'un remplissage d'eau complémentaire d'environ 10 litres avec addition de produit détergent pour le lavage principal.
